# FASCICULE DE BREVET EUROPEEN

(11) **EP 3 281 886 B1**
(45) Date de publication et mention de la délivrance du brevet: **16.06.2021**
(21) Numéro de dépôt: 16183773.7
(22) Date de dépôt: 11.08.2016
(51) Int. Cl.: B65D 88/12, B61D 5/00, B60P 3/22

(54) **CITERNE POUR LE TRANSPORT DE PRODUITS LIQUIDES OU PULVERULENTS COMPORTANT UN DISPOSITIF DE VIDANGE**
ZISTERNE FÜR DEN TRANSPORT VON FLÜSSIGEN ODER PULVERFÖRMIGEN PRODUKTEN, DIE EINE ENTLEERUNGSVORRICHTUNG UMFASST
TANK FOR TRANSPORTING POWDERY OR LIQUID PRODUCTS COMPRISING A DISCHARGE DEVICE

(43) Date de publication de la demande: 14.02.2018
(73) Titulaire: Etablissements MAGYAR, 21000 Dijon (FR)
(72) Inventeur: MAGYAR, Daniel, 21000 DIJON (FR); MAGYAR, Laurent, 75001 PARIS (FR)
(74) Mandataire: Cabinet Camus Lebkiri

(56) Documents cités:
- DE-B- 1 203 667
- DE-B1- 2 407 273
- DE-U1-202009 012 642
- FR-A- 989 334
- JP-U- H0 592 186

## Description

### DOMAINE TECHNIQUE

La présente invention se rapporte au domaine des citernes de manière générale pour le stockage et le transport de produits gazeux, liquides ou pulvérulents.

Ainsi, l'invention est applicable au domaine des conteneurs-citernes ou caisses mobiles citernes comportant une cuve avec une ossature métallique, aux wagons citernes ainsi qu'aux véhicules routiers citernes.

Plus particulièrement, l'invention concerne les citernes présentant un dispositif de vidange double, c'est-à-dire présentant deux raccords de vidange au niveau des deux flancs latéraux de la cuve.

### ETAT DE LA TECHNIQUE

Les citernes ont été développées pour répondre aux exigences de stockage et transport moderne. Différents types de citerne ont été développés de manière à pouvoir les transporter aussi bien par voie maritime, par fret, ou encore via le réseau routier.

Par exemple, les conteneurs-citernes présentent avantageusement une ossature métallique facilitant leur manutention avec les engins habituels de levage ainsi que leur stockage, en pile ou en rangés, dans des entrepôts ou sur des moyens de transport tels que des cargos, des wagons de train ou encore des camions.

Ce type de conteneur-citerne ou caisse mobile citerne comporte généralement en partie basse de la cuve de la citerne un dispositif de vidange ménagé au droit de l'axe vertical Y du conteneur-citerne.

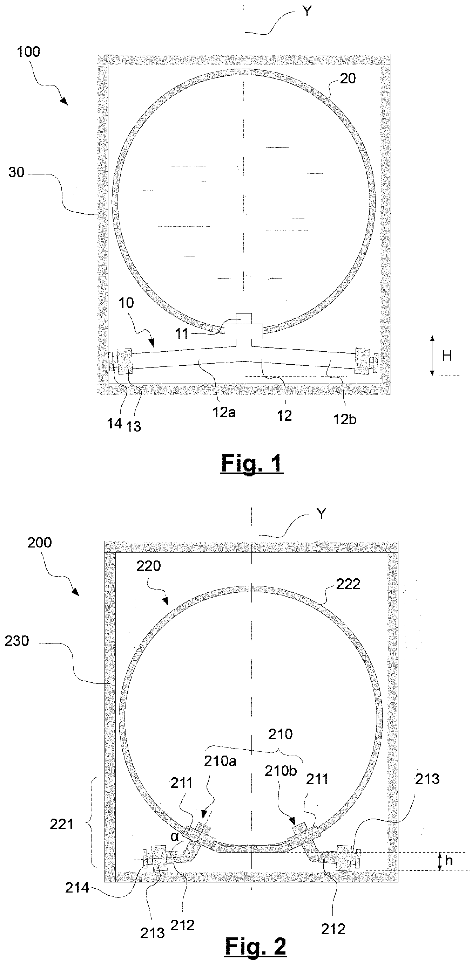

Certaines citernes (notamment les conteneurs-citernes) comportent un dispositif de vidange double comme présenté à la figure 1, permettant de réaliser la vidange du conteneur-citerne latéralement et de chaque côté du conteneur-citerne facilitant ainsi cette opération.

Un tel dispositif de vidange double est classiquement formé par :
- un clapet interne 11, ménagé au droit de l'axe vertical Y du conteneur-citerne 100 (c'est-à-dire au point le plus bas de la cuve) et traversant la paroi de la cuve 20 ;
- une tuyauterie de vidange 12 située à l'extérieur de la cuve 20, raccordée au clapet interne 11 et présentant deux branches latérales 12a et 12b s'étendant de manière transversale par rapport à l'axe longitudinal du conteneur-citerne ;
- deux vannes externes 13 positionnées au niveau de chacune des extrémités des branches latérales 12a, 12b de la tuyauterie de vidange 12 ;
- deux raccords 14 pour le raccord de tuyauteries au dispositif de vidange 10.

Malgré le gain de flexibilité de l'opération de vidange apporté par ce type de dispositif de vidange double, l'utilisation d'un tel dispositif vidange double présente des inconvénients. En effet, un premier inconvénient réside dans l'encombrement, notamment en hauteur d'un tel dispositif, ce qui oblige à surélever la cuve et donc à dégrader la stabilité de la cuve par la hausse de son centre de gravité, notamment pour les cuves de conteneurs-citernes présentant un très grand diamètre (de l'ordre de 2200mm).

Un deuxième inconvénient réside dans la possibilité d'une rétention de produit dans la tuyauterie de vidange, et notamment dans la branche latérale opposée à la branche latérale par laquelle le produit a été vidangé. Cette rétention peut subvenir lors d'un oubli de purge et/ou de nettoyage des tuyauteries de vidange ce qui peut provoquer des réactions violentes lors de mélange de deux produits non compatibles.

On connait également de DE 1 203 667 une citerne pour le transport de produits gazeux comportant une cuve et un dispositif de vidange formé de deux sous-ensembles de vidange reliés indépendamment à la cuve, les deux sous-ensembles étant positionnés en partie basse de la cuve de part et d'autre d'un axe vertical définissant un axe de symétrie. Cependant ce type de citerne ne permet pas d'optimiser l'encombrement d'une citerne disposée dans une ossature métallique.

### EXPOSE DE L'INVENTION

Dans ce contexte, l'invention vise à proposer une citerne permettant de résoudre les problèmes précités.

A cette fin, l'invention propose une citerne pour le transport de produits liquides ou pulvérulents selon l'objet de la revendication 1, la citerne comportant une cuve, une ossature métallique dans laquelle la cuve est positionnée et un dispositif de vidange, le dispositif de vidange est formé par deux sous-ensembles de vidange reliés indépendamment à ladite cuve, les deux sous-ensembles de vidange étant positionnés dans une partie basse de la cuve et de part et d'autre d'un axe vertical définissant un axe de symétrie de ladite cuve, les sous-ensembles de vidange du dispositif de vidange sont positionnés au niveau des deux flancs latéraux de la cuve de part et d'autre de l'axe vertical, chaque sous-ensemble de vidange du dispositif de vidange comporte une partie coudée formant un angle α entre les extrémités du sous-ensemble de vidange, chaque sous-ensemble de vidange comporte :
- un clapet interne traversant la paroi de la cuve au niveau d'un des deux flancs latéraux de la cuve ;
- une tuyauterie de raccord située à l'extérieur de la cuve et accessible au niveau des flancs latéraux de la cuve, la tuyauterie de raccord comportant la partie coudée ;
- une bride de maintien formant une liaison entre la tuyauterie de raccord et le clapet interne
les deux sous-ensembles de vidange étant positionnés de manière à ce qu'une première extrémité en connexion avec l'intérieur de la cuve de chaque sous-ensemble est inclinée et symétriques par rapport l'axe vertical.

La citerne selon l'invention peut également présenter une ou plusieurs des caractéristiques ci-après prises individuellement ou selon les combinaisons techniquement possibles :
- chaque sous-ensemble de vidange du dispositif de vidange comporte une vanne pour l'ouverture/fermeture indépendante de chaque sous-ensemble de vidange ;
- chaque sous-ensemble de vidange du dispositif de vidange comporte un raccord pour la connexion d'une tuyauterie externe à ladite citerne ;
- l'angle α est compris entre 100° et 170°, et préférentiellement égal à 135° ± 10° ;
- ladite citerne est un conteneur-citerne ;
- ladite citerne est une caisse mobile citerne ;
- ladite citerne est un wagon citerne ;
- ladite citerne est un véhicule routier citerne.

### BREVES DESCRIPTION DES FIGURES

D'autres caractéristiques et avantages de l'invention ressortiront plus clairement à la lecture de la description détaillée qui suit, en référence aux figures annexées suivantes :
La figure 1, déjà décrite, est une vue en coupe d'un conteneur-citerne comportant un dispositif de vidange double selon l'art antérieur.
La figure 2 représente une vue en coupe d'un conteneur-citerne selon l'invention.
La figure 3 illustre une vue de côté d'un exemple de réalisation d'une cuve de citerne.

Pour plus de clarté, les éléments identiques ou similaires sont repérés par des signes de références identiques sur l'ensemble des figures.

### DESCRIPTION DETAILLEE D'AU MOINS UN MODE DE REALISATION

La figure 2 illustre une vue en coupe selon une section transversale d'un conteneur-citerne 200 comportant une cuve 220 pour le stockage produits gazeux, liquides ou pulvérulents et une ossature métallique 230 dans laquelle la cuve 220 est positionnée. La cuve 220 présente une forme cylindrique, ou encore bi-tronconique.

Dans la partie basse 221 de la cuve, le conteneur-citerne comporte un dispositif de vidange 210 permettant la vidange de la cuve ou encore la distribution des produits stockés dans la cuve 220.

Le dispositif de vidange 210 selon l'invention est formé par deux sous-ensembles 210a, 210b indépendants et situés de part et d'autre de la cuve 220, et au niveau des deux flancs latéraux de la cuve 220,

Chacun des deux sous-ensembles 210a, 210b comporte :
- un clapet interne 211 traversant la paroi 222 de la cuve 220 ;
- une tuyauterie de raccord 212 située à l'extérieure de la cuve ;
- une vanne 213 pour permettre l'ouverture et la fermeture du dispositif de vidange ;
- un raccord 214 pour la connexion d'une tuyauterie pour la distribution du produit stocké dans la cuve 220.

Chacun des deux sous-ensembles 210a, 210b présente une partie coudée de sorte qu'un angle α est généré entre les extrémités du sous-ensemble 210a, 210b. L'angle α est formé par la tuyauterie de raccord 212 présentant un coude. Avantageusement, l'angle α de chaque sous-ensemble est compris entre 100° et 170° et préférentiellement égal à 135° ± 10°.

Ainsi, contrairement au conteneur-citerne de l'état de la technique, le conteneur-citerne selon l'invention ne présente pas un dispositif de vidange double positionné au niveau de l'axe vertical de symétrie de la cuve (illustré par l'axe Y sur la figure 2) mais deux sous-ensembles 210a, 210b dont la connexion avec l'intérieur de la cuve 220 est indépendante et positionnée de part et d'autre de l'axe vertical de symétrie Y (symbolisant la hauteur de la cuve 220), au niveau de la partie basse 221 des flancs latéraux de la cuve 220. Les deux sous-ensembles 210a, 210b sont positionnés de manière symétrique par rapport à l'axe vertical Y.

Le dispositif de vidange 210 selon l'invention est au point le plus bas de la cuve. A cet effet, la cuve comporte un aménagement au point le plus bas de la cuve et au droit du dispositif de vidange 210 de manière à permettre la vidange totale de la cuve 210.

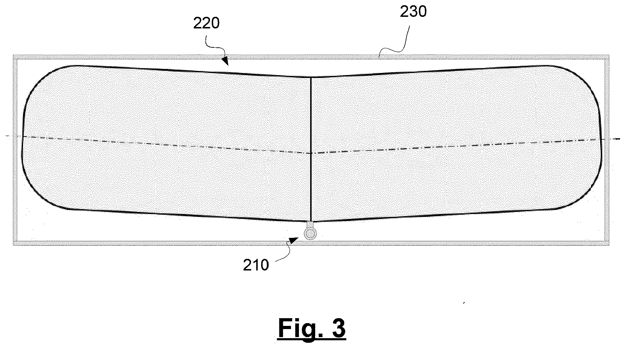

Ainsi, le dispositif de vidange 210 peut être positionné aussi bien vers l'avant, vers l'arrière ou au centre de la cuve 220 (dans le sens longitudinal de la cuve) en fonction de l'inclinaison donnée à la cuve 220 et en fonction de la forme de la cuve (notamment dans le cas d'une cuve de forme tronconique ou bi-tronconique). La figure 3 illustre schématiquement, selon une vue de côté, un exemple de réalisation d'une cuve cylindrique bi-pente où le point le plus bas se situe au centre de la cuve. La cuve 220 peut également comporter plusieurs compartiments étanches séparés les uns des autres par une cloison étanche. Dans ce mode de réalisation, la cuve comporte un dispositif de vidage 210 au niveau de chaque compartiment étanche de la cuve.

Ainsi, le dispositif de vidange 210 selon l'invention présente un encombrement h réduit par rapport à l'encombrement H d'un dispositif de vidange double selon l'état de la technique. La réduction de l'encombrement du dispositif selon l'invention permet ainsi d'abaisser le centre de gravité de la cuve. Par conséquent, le conteneur-citerne 210 selon l'invention présente une meilleure stabilité de la cuve. La présence de deux « circuits » de vidange indépendants permet également de s'affranchir des risques de présence de résidus dans les tuyauteries de vidange, notamment dans la branche latérale opposée à la branche latérale servant à la vidange.

Le montage avec deux « circuits » de vidange indépendants permet également d'assurer la vidange de la cuve 220 même en cas de défaillance ou de blocage accidentel d'un des clapets internes position fermée, ou en cas de fuite d'une des tuyauteries ou d'une des brides de maintien de la tuyauterie au niveau de la liaison entre la tuyauterie et le clapet interne.

L'invention a été décrite particulièrement dans le cadre d'une citerne de type conteneur-citerne ; toutefois, l'invention est également applicable aux citernes en général ainsi qu'aux caisses mobiles citernes, aux wagons citernes, aux véhicules citernes pour le transport par voie maritime, par fret, ou encore via le réseau routier.

## Revendications

1. Citerne (200) pour le transport de produits liquides ou pulvérulents comportant une cuve (220) de forme cylindrique ou bitronconique et un dispositif de vidange (210) formé par deux sous-ensembles de vidange (210a, 210b) reliés indépendamment à ladite cuve (220), les deux sous-ensembles de vidange étant positionnés dans une partie basse (221) de la cuve (200) et de part et d'autre d'un axe vertical (Y) définissant un axe de symétrie de ladite cuve, les deux sous-ensembles de vidange (210a, 210b) du dispositif de vidange (210) sont positionnés au niveau de deux flancs latéraux de la cuve (220) de part et d'autre de l'axe vertical (Y), les deux sous-ensembles de vidange (210a, 210b) du dispositif de vidange sont symétriques par rapport à l'axe vertical (Y), chaque sous-ensemble de vidange (210a, 210b) du dispositif de vidange comporte une partie coudée formant un angle (α) entre les extrémités du sous-ensemble de vidange (210a, 210b), la citerne comprend une ossature métallique (230) dans laquelle la cuve (220) est positionnée et chaque sous-ensemble de vidange (210a, 210b) comporte :
- un clapet interne (211) traversant la paroi (222) de la cuve (220) au niveau d'un des deux flancs latéraux de la cuve (220) ;
- une tuyauterie de raccord (212) située à l'extérieur de la cuve (220) et accessible au niveau des flancs latéraux de la cuve (220), la tuyauterie de raccord (212) comportant la partie coudée ;
- une bride de maintien formant une liaison entre la tuyauterie de raccord (212) et le clapet interne (211) ;
les deux sous-ensembles de vidange (210a, 210b) étant positionnés de manière à ce qu'une première extrémité en connexion avec l'intérieur de la cuve de chaque sous-ensemble est inclinée rapport à l'axe vertical (Y).

2. Citerne (200) selon la revendication 1 **caractérisée en ce que** chaque sous-ensemble de vidange (210a, 210b) du dispositif de vidange (210) comporte une vanne (213) pour l'ouverture/fermeture indépendante du sous-ensemble de vidange (210a, 210b).

3. Citerne (200) selon l'une des revendications 1 à 2 **caractérisé en ce que** chaque sous-ensemble de vidange (210a, 210b) du dispositif de vidange (210) comporte un raccord (214) pour la connexion d'une tuyauterie externe à ladite citerne (200).

4. Citerne (200) selon la revendication 1 **caractérisé en ce que** l'angle α est compris entre 100° et 170°, et préférentiellement égal à 135° ± 10°.

5. Citerne (200) selon l'une des revendications 1 à 4 **caractérisé en ce que** ladite citerne (200) est un conteneur-citerne ou une caisse mobile citerne.

6. Citerne (200) selon l'une des revendications 1 à 4 **caractérisé en ce que** ladite citerne (200) est un wagon citerne.

7. Citerne (200) selon l'une des revendications 1 à 4 **caractérisé en ce que** ladite citerne (200) est un véhicule routier citerne.

## Patentansprüche

1. Tank (200) für den Transport von flüssigen oder pulverförmigen Produkten, umfassend ein Becken (220) in zylindrischer oder bikonischer Form und eine Entleerungsvorrichtung (210), die durch zwei Entleerungs-Teilgruppen (210a, 210b) gebildet ist, die unabhängig voneinander mit dem genannten Becken (220) verbunden sind, wobei die zwei Entleerungs-Teilgruppen in einem unteren Teil (221) des Beckens (200) und auf jeder Seite einer vertikalen Achse (Y) positioniert sind, die eine Symmetrieachse des genannten Beckens bildet, wobei die zwei Entleerungs-Teilgruppen (210a, 210b) der Entleerungsvorrichtung (210) an zwei seitlichen Flanken des Beckens (220) auf jeder Seite der vertikalen Achse (Y) positioniert sind, wobei die zwei Entleerungs-Teilgruppen (210a, 210b) der Entleerungsvorrichtung in Bezug auf die vertikale Achse (Y) symmetrisch sind, jede Entleerungs-Teilgruppe (210a, 210b) der Entleerungsvorrichtung einen gekrümmten Teil umfasst, der einen Winkel (α) zwischen den Enden der Entleerungs-Teilgruppe (210a, 210b) bildet, der Tank ein Metallgerippe (230) umfasst, in dem das Becken (220) positioniert ist und jede Entleerungs-Teilgruppe (210a, 210b) umfasst:
- eine Innenklappe (211), die die Wand (222) des Beckens (220) an einer der zwei seitlichen Flanken des Beckens (220) durchquert;
- eine Anschluss-Rohrleitung (212), die an der Außenseite des Beckens (220) angeordnet und an den seitlichen Flanken des Beckens (220) zugänglich ist, wobei die Rohrleitung (212) den gekrümmten Teil umfasst;
- einen Halteflansch, der eine Verbindung zwischen der Anschluss-Rohrleitung (212) und der Innenklappe (211) bildet;
wobei die zwei Entleerungsgruppen (210a, 210b) derart positioniert sind, dass ein erstes Ende im Anschluss mit dem Innern des Beckens jeder Teilgruppe in Bezug auf die vertikale Achse (Y) geneigt ist.

2. Tank (200) gemäß Anspruch 1, **dadurch gekennzeichnet, dass** jede Entleerungs-Teilgruppe (210a, 210b) der Entleerungsvorrichtung (210) ein Ventil (213) zum unabhängigen Öffnen / Schließen der Entleerungs-Teilgruppe (210a, 210b) umfasst.

3. Tank (200) gemäß einem der Ansprüche 1 bis 2, **dadurch gekennzeichnet, dass** jede Entleerungs-Teilgruppe (210a, 210b) der Entleerungsvorrichtung (210) einen Anschluss (214) für die Verbindung einer externen Rohrleitung mit dem genannten Tank (200) umfasst.

4. Tank (200) gemäß Anspruch 1, **dadurch gekennzeichnet, dass** der Winkel α zwischen 100 ° und 170 ° inbegriffen ist und bevorzugt gleich 135 ° +/- 10 ° beträgt.

5. Tank (200) gemäß Anspruch 1 bis 4, **dadurch gekennzeichnet, dass** der der genannte Tank (200) ein Containertank oder ein Wechselbehälter-Tank ist.

6. Tank (200) gemäß einem der Ansprüche 1 bis 4, **dadurch gekennzeichnet, dass** der genannte Tank (200) ein Tankwaggon ist.

7. Tank (200) gemäß einem der Ansprüche 1 bis 4, **dadurch gekennzeichnet, dass** der genannte Tank (200) ein Straßentankwagen ist.

## Claims

1. A tank (200) for transporting liquid or powdery products including a vessel (220) with a cylindrical or double frustro-conical shape and a draining device (210) formed by two draining sub-assemblies (210a, 210b) independently interconnected to said vessel (220), both draining sub-assemblies being positioned in a bottom part (221) of the vessel (200) and on either side of a vertical axis (Y) defining an axis of symmetry of said vessel, both draining sub-assemblies (210a, 210b) of the draining device (210) are positioned at two side flanks of the vessel (220) on either side of the vertical axis (Y), both draining sub-assemblies (210a, 210b) of the draining device are symmetrical relative to the vertical axis (Y), each draining sub-assembly (210a, 210b) of the draining device includes a bent part forming an angle (α) between the ends of the draining sub-assembly (210a, 210b),
the tank comprises a metal framework (230) in which the vessel (220) is positioned and each draining sub-assembly (210a, 210b) includes:
- an inner flapper (211) passing through the wall (222) of the vessel (220) at one of both side flanks of the vessel (220);
- a fitting piping (212) located outside the vessel (220) and accessible from the side flanks of the vessel (220), the fitting piping (212) including the bent part;
- a holding flange forming a connection between the fitting piping (212) and inner flapper (211);
both draining sub-assemblies (210a, 210b) being positioned so that a first end in connection with the inside of the vessel of each sub-assembly is tilted relative to the vertical axis (Y).

2. The tank (200) according to claim 1, **characterised in that** each draining sub-assembly (210a, 210b) of the draining device (210) includes a valve (213) for independently opening/closing the draining sub-assembly (210a, 210b).

3. The tank (200) according to one of claims 1-2, **characterised in that** each draining sub-assembly (210a, 210b) of the draining device (210) includes a fitting (214) for connecting an outer piping to said tank (200).

4. The tank (200) according to claim 1, **characterised in that** the angle α is between 100° and 170°, and preferentially equal to 135° ± 10°.

5. The tank (200) according to one of claims 1-4, **characterised in that** said tank (200) is a tank-container or a tank swap body.

6. The tank (200) according to one of claims 1-4, **characterised in that** said tank (200) is a tank car.

7. The tank (200) according to one of claims 1-4, **characterised in that** said tank (200) is a tank road vehicle.
